# EUROPEAN PATENT SPECIFICATION

(11) **EP 3 928 609 B1**
(45) Date of publication and mention of the grant of the patent: **23.11.2022**
(21) Application number: 20182422.4
(22) Date of filing: 26.06.2020
(51) Int. Cl.: A01C 3/02, F24D 11/02, F24D 19/10, F25B 25/00

(54) **A METHOD FOR COOLING LIVESTOCK WASTE AND A SYSTEM FOR COOLING LIVESTOCK WASTE**
VERFAHREN ZUM KÜHLEN VON VIEHABFÄLLEN UND SYSTEM ZUM KÜHLEN VON VIEHABFÄLLEN
PROCÉDÉ ET SYSTÈME DE REFROIDISSEMENT DE DÉCHETS D'ÉLEVAGE

(43) Date of publication of application: 29.12.2021
(73) Proprietor: Klimadan A/S, 7430 Ikast (DK)
(72) Inventor: THOMSEN, Jan, 7430 Ikast (DK)
(74) Representative: Patentgruppen A/S

(56) References cited:
- EP-A1- 0 677 237
- WO-A1-01/20234
- CH-A5- 673 075
- DE-A1- 2 530 804
- DE-A1- 2 928 627
- DE-A1- 3 107 976
- DE-A1- 19 751 178
- DE-A1-102010 049 134
- US-A- 3 926 008

## Description

### Field of the invention

The present invention relates to a method for cooling livestock waste in a livestock farm. The invention further relates to a heat pump system for cooling livestock waste in a livestock farm.

### Background of the invention

Livestock is a fundamental building brick of the food industry. In typical livestock farms arranged for housing livestock, the livestock excrete large amounts of warm livestock waste.

Livestock waste contain large amounts of ammonia, as well other compounds. Evaporation of ammonia from livestock waste is particularly prominent from warm livestock waste. Consequently, large amounts of ammonia are continuously being emitted from livestock farms to pollute surrounding areas. Further, ammonia may be converted into ammonium, which can pollute over larger distances. Besides being a source of pollution, livestock waste generates foul-smelling odours in livestock farms and their surroundings.

From the patent application DE 3107976 A1, a heat exchanger arranged in a barn is known, wherein heat is recovered in the barn and provided to a buffer tank via a heat pump From the patent application DE 2928627 A1, a heat pump system and method for cooling livestock waste in a livestock farm is known, wherein a heat pump mode and a free cooling mode are used according to the ambient conditions.

### Summary of the invention

The inventors have identified the above-mentioned problems and challenges related to livestock waste, and subsequently made the below-described invention which may decrease pollution and odours.

The invention relates to a method for cooling livestock waste in a livestock farm, said method comprising the steps of:
arranging a farm circuit to exchange heat with said livestock waste in said livestock farm by circulating a coolant through said farm circuit;
initiating a first cooling procedure, wherein said coolant is cooled by exchanging heat with an evaporator of a heat pump circuit while cooling a condenser of said heat pump circuit by exchanging heat with a central heating fluid circulating a central heating system, when a central heating temperature of said central heating fluid is below a central heating threshold temperature;
initiating a second cooling procedure, wherein said coolant is cooled by exchanging heat directly with an external environment, when an environment temperature of said external environment is below an environment threshold temperature; and
initiating a third cooling procedure, wherein said coolant is cooled by exchanging heat with said evaporator while cooling said condenser by exchanging heat with said external environment, when said environment temperature is above said environment threshold temperature, when said central heating temperature is above said central heating threshold temperature, and when a predefined average cooling effect of said livestock waste has not been reached within a predefined period of time.

In the context of the present invention, a livestock farm may be understood as any type of facility arranged to house livestock. Livestock may refer to any breed or population of animals kept by humans for a commercial purpose, for example for production of commodities such as food or fur. The livestock may for example be any type of cattle, pig, sheep, goats, horses, yak, or buffalo.

Livestock waste may be understood as excrements and/or urine produced/generated/excreted by the livestock in the livestock farm. Some livestock farms may for example have one or more waste gutters, arranged to receive livestock waste and typically partially covered by gratings. Some livestock farms do not have a waste gutter, and livestock waste may be received by the floor also inhabited by the livestock itself.

Typical embodiments of the invention comprise switching between the three cooling procedures, which may for example be understood as stopping one cooling procedure and initiating another cooling procedure.

In an exemplary embodiment of the invention, a farm circuit is arranged to remove heat from livestock waste by circulating a coolant. Heat is removed using three distinct cooling procedures, operating one of the cooling procedures at a time. A controller is arranged to select and initiate the different procedures. In the first cooling procedure, heat is removed from the coolant by exchanging the heat with a heat pump circuit via an evaporator of the heat pump circuit and, in turn, heat is removed from the heat pump circuit by exchanging the heat with a central heating fluid circulating in a central heating system via a condenser of the heat pump circuit. In the second cooling procedure, heat is removed from the coolant by circulating the coolant through an external environment circuit to exchange heat with an external environment. The coolant may for example be circulated through a dry cooler or a cooling tower located in a cool outside environment. In the third cooling procedure, the coolant exchanges heat with the heat pump circuit via the evaporator, heat is removed from the heat pump circuit by exchanging heat with the central heating fluid via the condenser, and heat is removed from the central heating fluid by exchanging heat with the external environment circuit. The controller switches between these three cooling procedures based on central heating demand and conditions of the external environment, and to accomplish a predefined average cooling effect of the livestock waste within a predefined period of time. Initiating the three cooling procedures is facilitated by controlling valves and/or pumps.

In the context of the second cooling procedure of the present invention, exchanging heat directly with an external environment should be understood as exchanging heat with the external environment unaided by the heat pump. For example, the coolant may be circulated to the external environment, or heat may be transferred to from the coolant to a fluid circulating the external environment through a heat exchanger.

In the context of the present invention, effect may for example refer to an amount of energy transferred or converted per unit time.

A predefined period of time may for example be an hour, a day, a month, or a year. A predefined average cooling effect may for example be from 1 kW to 500 kW, for example from 5 kW to 100 kW, for example 30 kW. A predefined average cooling effect of said livestock waste within a predefined period of time or applied for the predefined period of time may also be understood as a predefined amount of heat energy removed within the predefined period of time. For example, a predefined average cooling effect of 30 kW within a day may also be understood as 720 kWh of energy removed within that day.

An external environment may for example comprise air, soil, groundwater, seawater, freshwater, or any combination of these. Generally, the external environment may be understood as any environment outside the livestock farm.

An advantage of the invention is that it reduces the temperature of livestock waste, and accordingly ammonia and ammonium pollution, as well as foul-smelling odours, are reduced. Particularly, the invention enables removing heat from livestock waste within a predefined period of time and beyond the heat demand for central heating. As such, a manager of the livestock farm may implement the invention to ensure a certain reduction ammonia and ammonium pollution and/or a certain reduction of foul-smelling odours, which does not depend on e.g. central heating demands. This is particularly advantageous when the external environment is warm and central heating demands are low, where neither the first nor second cooling procedures are plausible to use. Under such conditions, a hypothetical method for cooling livestock waste without the third cooling procedure of the invention would not be able to properly remove heat from the livestock waste, consequently resulting in pollution and unpleasant odours.

Note that livestock waste may typically possess more heat than required for central heating. Increasing the temperature of the central heating arbitrarily is not a solution since the heat pump becomes energy inefficient and, additionally, a central heating temperature cannot be increased arbitrarily as it may start to boil and/or damage its surroundings.

A further advantage of the invention is that it reduces power consumption associated with cooling of livestock waste. Particularly, the invention enables removing heat from livestock waste by exchanging heat with an external environment whenever a cold external environment is available.

A further advantage of the invention is that it provides heat for central heating purposes. Providing central heating in a farm/livestock environment can be a particularly comprehensive task since such environments may have many several different sources of heat consumption, e.g. housing of other livestock and housing of people. However, using the method according to the invention, there is typically be no upper limit as to how much heat which is removable from the livestock waste.

A further advantage of the invention is that it ensures an improvement of living standards of the livestock, particularly since the temperature of the livestock farm is reduced as a consequence of cooling the livestock waste.

A further advantage of the invention is that the method is adaptable to day-to-day changes, while providing cooling of livestock waste and central heating.

A further advantage of the invention is that the method is adaptable to the changing of seasons of the year, while providing cooling of livestock waste and central heating.

A further advantage of the invention is that the method is adaptable to geographical weather conditions, while providing cooling of livestock waste and central heating.

Some jurisdictions, states, or nations have or may have legal requirements regarding heat removal from livestock waste. For example, a nation may legally require a certain amount of heat to be removed from livestock waste on a daily and/or an annual basis. A further advantage of the invention is that it may assist the user to straightforwardly practice within such legal requirements.

Note that embodiments according to the invention may remove the heat according to any distribution within the predefined period of time. The heat may for example primarily be removed during a time window which is smaller than the predefined period of time. If for example the predefined period of time is a day, the heat may for example primarily be removed during the last half of that day. Such flexibility is advantageous, since it allows as much heat as possible to be allocated to central heating purposes, e.g. before the third cooling procedure is initiated.

In typical embodiments, the three cooling procedures are prioritized such that the first cooling procedure has first priority, the second cooling procedure has second priority, and the third cooling procedure has third priority. Consequently, if the first cooling procedure is active, then the second and third cooling procedures cannot be initiated, until conditions for stopping the first cooling procedure are fulfilled, e.g. the central heating temperature exceeds the central heating threshold temperature. Similarly, if the second cooling procedure is active, then the third cooling procedure cannot be initiated, until conditions for stopping the second cooling procedure are fulfilled, e.g. the environment temperature is below the environment threshold temperature. If, however, the second or the third cooling procedure is active, then if conditions for initiating the first cooling procedure are met, e.g. the central heating temperature is below the central heating threshold temperature, then the first cooling procedure is initiated, since it has priority. And similarly, if the second cooling procedure is active, the third cooling procedure cannot be activated, whereas if the third cooling procedure is active, then the second cooling procedure can be initiated. However, note that the invention is not limited to any particular priority of cooling procedures.

In an embodiment of the invention, said central heating threshold temperature is from 20 degrees Celsius to 90 degrees Celsius, for example from 40 degrees Celsius to 80 degrees Celsius, for example 60 degrees Celsius.

In an embodiment of the invention, said environment threshold temperature is from -20 degrees Celsius to 40 degrees Celsius, for example from -10 degrees Celsius to 25 degrees Celsius, for example from 0 degrees Celsius to 20 degrees Celsius, for example 5 degrees Celsius.

In an embodiment of the invention, said predefined period of time is an hour.

In an embodiment of the invention, said predefined period of time is a day.

In an embodiment of the invention, said predefined period of time is a week.

In an embodiment of the invention, said predefined period of time is a month.

In an embodiment of the invention, said predefined period of time is a year.

In an embodiment of the invention, said second cooling procedure is initiated when said central heating temperature is above said central heating threshold temperature.

Initiating the second cooling procedure when the central heating temperature is above the central heating threshold temperature is advantageous, since at this point, the first cooling procedure is typically inactive.

In an embodiment of the invention, said second cooling procedure is initiated when said predefined average cooling effect of said livestock waste has not been reached within said predefined period of time.

Initiating the second cooling procedure based on the predefined average cooling effect is advantageous, since it enables the predefined average cooling effect to be reached through exchanging heat with the external environment which consumes little power. Moreover, when the predefined average cooling effect has been reached within the predefined period of time, the second cooling procedure may be deactivated to further reduce power consumption.

In an embodiment of the invention, only one of said first cooling procedure, said second cooling procedure, and said third cooling procedure can be active at a time.

A method comprising three procedures in which only one of these are active at a time is advantageous, since switching between three separate procedures for removing heat provides great flexibility.

In some embodiments of the invention, a cooling procedure of the invention comprises exchanging heat with a central heating system and an external environment. In these embodiments, exchanging heat with the external environment may or may not be facilitated via the heat pump circuit.

In an embodiment of the invention, said method comprises a step of establishing a present cooling effect indicative of a rate at which heat energy is currently being removed from said livestock waste.

A present cooling effect may for example be establishing by of measuring temperatures of the coolant before and after heat exchange with the livestock waste. Based on these temperatures as well as heat capacity and flow rate, a present cooling effect may be obtained.

In an embodiment of the invention, said method comprises a step of establishing an achieved cooling energy, indicative of an amount of heat energy previously removed from said livestock waste within said predefined period of time and a step of establishing a remaining cooling energy, indicative of an amount of heat energy remaining to be removed from said livestock waste to reach said predefined average cooling effect within said predefined period of time.

In some embodiments of the invention, the achieved cooling energy is based on a present cooling effect.

In some embodiments of the invention, the remaining cooling energy is based on the achieved cooling energy and the predefined average cooling effect to be reached within the predefined period of time. Since the predefined average cooling effect within the predefined period of time corresponds to a predefined amount of heat energy removed within the predefined period of time, the remaining cooling energy may for example be established based on subtraction of the achieved cooling energy from the predefined amount of heat energy.

Establishing a present cooling effect, an achieved cooling energy, for example based on the present cooling effect, and/or a remaining cooling energy is advantageous since this may be used to determine whether the predefined average cooling effect is reached within the predefined period of time. Further, it may be used to estimate whether an initiation of one of the cooling procedures is necessary, or to evaluate the performance of the different cooling procedures.

In an embodiment of the invention, said method comprises a step of establishing a predicted cooling energy of said third cooling procedure, indicative of an amount of heat energy predicted to be removed by initiating and applying said third cooling procedure for a remaining duration of said predefined period of time; wherein said third cooling procedure is initiated when a difference between said predicted cooling energy of said third cooling procedure and said remaining cooling energy is below a third cooling procedure threshold.

Establishing a predicted cooling energy of the third cooling procedure may for example be based on multiplication of the remaining duration of the predefined period of time with a predicted cooling energy removed per unit of time by the third cooling procedure.

Establishing a predicted cooling energy of the third cooling procedure is advantageous since initiation of the third cooling procedure may be based on this. Namely, it allows delaying initiation of the third cooling procedure as much as possible, such that as much cooling as possible can be performed by the first or the second cooling procedures, which minimized power consumption.

The third cooling procedure threshold, which the third cooling procedure is initiated upon, may for example be based on a relative difference and/or an absolute difference.

In an exemplary embodiment, the third cooling procedure threshold is 20 kWh, the remaining cooling energy is 200 kWh, and the predicted cooling energy of the third cooling procedure is 219 kWh, such that the difference is 19 kWh, which is below the third cooling procedure threshold and therefore the third cooling procedure is initiated.

In another exemplary embodiment, the third cooling procedure threshold is 10 percent, the remaining cooling energy is 100 kWh, and the predicted cooling energy of the third cooling procedure is 109 kWh, such that the difference is 9 percent, which is below the third cooling procedure threshold and therefore the third cooling procedure is initiated.

These above examples of third cooling procedure thresholds should be understood as exemplary, and a skilled person may implement more elaborate types of thresholds for initiating the third cooling procedure within the scope of the claims.

Initiating the third cooling procedure based on a third cooling procedure threshold is advantageous, since it enables initiating the third cooling procedure as late as possible within the predefined window of time. This is advantageous, since the third cooling procedure does not generate central heating, while it may consume more energy than the second cooling procedure.

In an embodiment of the invention, said third cooling procedure is initiated when said achieved cooling energy is below said predefined average cooling effect applied for said predefined period of time.

The predefined average cooling effect applied for said predefined period of time may be understood as a predefined amount of heat energy to be removed within the predefined period of time. As such, in some embodiments of the invention, the third cooling procedure may be initiated as long as the achieved cooling energy is below the predefined amount of energy to be removed within the predefined period of time and given that the first or second cooling procedures are not active.

This is advantageous, since it ensures that the third cooling procedure is primarily initiated when then achieved cooling energy has not reached the predefined amount of heat energy to be removed within the predefined period of time.

In an embodiment of the invention, initiating said third cooling procedure is based on power availability.

Power availability may for example be based on current load on the power grid, current power production, and/or current electricity prices. Current power production may be on the power grid or from a local power source, e.g. solar cells or a wind turbine.

Initiating the third cooling procedure based on power availability is advantageous, since it allows utilizing peaks in power production for removing heat from the livestock waste.

In an embodiment of the invention, initiating said third cooling procedure is based on a central heating demand prediction.

In some periods, large amounts of central heating may be required, for example during winter. If large amounts of central heating are predicted to be required, an initiation of the third cooling procedure may be delayed accordingly, such that the third cooling procedure is used minimally, which is advantageous due to its power consumption.

In an embodiment of the invention, said exchanging heat with said external environment of said second cooling procedure comprises exchanging heat with said external environment via an external environment circuit.

In an embodiment of the invention, said exchanging heat with said external environment of said third cooling procedure comprises exchanging heat with said external environment via an auxiliary external environment circuit.

An external environment circuit and an auxiliary external environment circuit may for example be arranged to circulate coolant or central heating fluid to the external environment or to at least one external sub-environment of the external environment. In some embodiments, the external environment circuit and the auxiliary external environment circuit may be the same circuit.

Having one or more circuits which are usable to facilitate exchanging heat with the external environment is advantageous since exchanging heat with the external environment may be an energy-efficient approach to remove heat from the livestock waste.

In an embodiment of the invention, an evaporator temperature of said evaporator is regulated to remove heat from said livestock waste.

Regulating the evaporator temperature may be equivalent to regulating the coolant temperature.

Regulating the evaporator temperature is advantageous since et may improve the rate at which heat is removed from the livestock waste, or it may reduce power consumption.

In an embodiment of the invention, said method further comprises a step of initiating a pausing procedure.

In an embodiment of the invention, said pausing procedure comprises stopping said circulating said coolant.

In an embodiment of the invention, said initiating said pausing procedure is based on said achieved cooling energy, said predefined average cooling effect, and said predicted cooling energy of said third cooling procedure.

During a pausing procedure, the method removes no substantial heat from the livestock waste. A pausing procedure may be understood as a procedure in which none of the first, the second or the third cooling procedures are active. Typically, the coolant is not circulated during the pausing procedure.

Initiating a pausing procedure is advantageous since it enables reducing power consumption of the method for some duration of the predefined period of time.

Particularly, a pausing procedure is useful to initiate when the first or second cooling procedure are not currently initiated/active, while the achieved cooling energy is sufficiently large that initiating the third cooling procedure is not necessary or necessary yet for reaching the predefined average cooling effect within the predefined period of time.

In an embodiment of the invention, said first cooling procedure comprises regulating said condenser to a first condenser temperature and said third cooling procedure comprises regulating said condenser to a second condenser temperature, wherein said second condenser temperature is below said first condenser temperature.

A heat pump may typically be associated with a coefficient of performance, which is indicative of power consumption of the heat pump. A larger coefficient of performance results in a more energy efficient heating and/or cooling. A larger coefficient of performance can be obtained by reducing the temperature difference between the evaporator and the condenser.

When providing heat for central heating, the temperature of the condenser cannot be reduced arbitrarily, thus limiting the coefficient of performance when using the first cooling procedure. However, when initiating the third cooling procedure, it is possible to reduce the temperature of the condenser.

As such, to increase energy efficiency, it is advantageous to reduce the temperature of the condenser during the third cooling procedure, in comparison with the temperature of the condenser during the first cooling procedure.

Regulating a condenser to a condenser temperature may be understood as regulating a temperature of the condenser to the condenser temperature.

In an embodiment of the invention, said method comprises a step of regulating said second condenser temperature based on said environment temperature.

When the environment temperature is low, a small second temperature difference between the evaporator and the condenser can be used to efficiently cool the livestock waste, which reduces power consumption. However, a small second temperature difference cannot be used to efficiently cool the livestock waste if the environment temperature is high.

As such, regulating the condenser temperature based on the environment temperature is advantageous, since it permits the third cooling procedure to efficiently cool the livestock waste, while minimizing power consumption.

In an embodiment of the invention, said method comprises a step of regulating said second condenser temperature based on said remaining cooling energy.

If the temperature difference between the evaporator and the condenser is large, it is possible to increase the rate at which the livestock waste is cooled. But reducing the temperature difference reduces energy consumption. Therefore, it is advantageous to regulate the condenser temperature based on the remaining cooling energy, such that energy consumption can be reduced as much as possible, while a sufficient rate is ensured.

In an embodiment of the invention, said method comprises a step of selecting an external sub-environment from a list of external sub-environments, such that any heat stemming from said livestock waste which is exchanged with said external environment is primarily exchanged with said external sub-environment.

An external sub-environment may for example be understood as be air, soil, groundwater, seawater, or freshwater.

Some embodiments of the invention may for example comprise two external sub-environments, for example air and soil. Based on at least one temperature measured in one of these external environments, one of the two sub-environments is selected. Consequently, this selected sub-environment receives heat stemming from the livestock waste during the second and third cooling procedures.

This is advantageous, since it allows optimal utilization of several external sub-environments, ensuring energy-efficient cooling of the livestock waste.

Some embodiments of the invention may comprises selecting several external sub-environments from the list of external sub-environments.

In an embodiment of the invention, said exchanging heat with said external environment comprises rotating one or more fans, wherein each fan is associated with a rotational speed, wherein said rotational speed is regulated differently based on initiating said second and said third cooling procedures.

In an embodiment of the invention, said exchanging heat with said external environment comprises rotating one or more fans, wherein each fan is associated with a rotational speed, wherein said rotational speed is regulated based on said external environment temperature.

For example, an external environment circuit may be associated with a dry cooler which in turn has an associated fan. Using a fan is advantageous, since it improves the heat exchange rate.

Regulating the rotational speed of a fan based on the external environment temperature or based on whether the second or third cooling procedure is activated is advantageous since it allows energy consumption and heat exchange of the method to be optimized. For example, if an external environment has a temperature below a certain threshold, the rotational speed of the fan may be reduced, since sufficient heat exchange will take place. And for example, if an external environment has a temperature above a certain threshold, the rotational speed of the fan may be increased, to ensure that sufficient heat exchange takes place

In an embodiment of the invention, said rotational speed is regulated based on said predefined average cooling effect and said remaining cooling energy.

It is advantageous to regulate fan speed based on the predefined average cooling effect and the remaining cooling energy, since this may reduce power consumption while ensuring that said predefined average cooling effect is reached within the predefined period of time.

In an embodiment of the invention, said method further comprises initiating said third cooling procedure when a second predefined average cooling effect of said livestock waste has not been reached within a second predefined period of time.

Some embodiments of the invention are arranged to provide both a predefined average cooling effect of the livestock waste within a predefined period of time and a second predefined average cooling effect of the livestock waste within a second predefined period of time. For example, some embodiments are arranged to provide a predefined average cooling effect each hour and a second predefined average cooling each day. Other embodiments are arranged to provide a predefined average cooling effect each day and a second predefined average cooling each year.

An advantage of such embodiments is that they may both ensure balanced short-term and long-term cooling. A further advantage of such embodiments is that they may ensure that all cooling is not performed within a very short duration.

In an embodiment of the invention, said method comprises a step of activating an alarm, if said predefined average cooling effect is not reached within said predefined period of time.

If for example initiating a third cooling procedure is based on a predicted cooling energy of said third cooling procedure, an inaccurate prediction might result in not reaching the predefined average cooling effect within the predefined period of time. Alternatively, an error or a malfunction may occur, such that the predefined average cooling effect is not reached within the predefined period of time, in which case an alarm is also convenient and advantageous.

Activating an alarm is advantageous, since it allows the user to adjust the method, e.g. adjust parameters of the method, e.g. a threshold temperature, such that the predefined average cooling effect is reached within the predefined period of time.

In some embodiments of the invention, the alarm may also be based on a prediction, e.g. a prediction whether the predefined average cooling effect is reached within the predefined period, and thus the alarm may be activated before the end of the predefined period of time.

The alarm may for example be facilitated by sound, lights, or a digital message, for example a digital message on a display of a heat pump system associated with the method, to an email, or to a smartphone app.

In an embodiment of the invention, one or more of the following are arranged to be user-configurable: said predefined period of time; said predefined average cooling effect; said second predefined period of time; said second predefined average cooling effect; said central heating threshold temperature; said environment threshold temperatures; evaporator temperature; said first condenser temperature; said second condenser temperature; and said rotational speed.

Having one or more user-configurable parameters is advantageous, since it allows the user to adapt the method to personal preferences and to optimize energy consumption of the method.

In an embodiment of the invention, said method comprises a step of recording heat pump data and storing said heat pump data on a computer system comprising a data storage, wherein said heat pump data comprises digital representations of one or more of the following:
time stamps;
said initiating said first cooling procedure;
said initiating said second cooling procedure;
said initiating said third cooling procedure;
said predefined average cooling effect;
a present cooling effect;
said achieved cooling energy;
said remaining cooling energy;
said central heating temperature;
said environment temperature;
said evaporator temperature;
said first condenser temperature;
said second condenser temperature;
said external sub-environment;
said rotational speed; and
an electrical energy consumption associated with said method.

Logging of various information and data is advantageous since it serves as documentation for the actual cooling which was performed.

Further, logging is advantageous since it may serve as a tool for various optimizations, for example optimization of heat production and/or livestock waste cooling.

The logged information may for example be accessible via a cloud storage or via a local wireless or wired connection, e.g. a Bluetooth or a USB connection.

An aspect of the invention relates to a heat pump system for cooling livestock waste in a livestock farm, said heat pump system comprising:
a central heating system;
an external environment circuit arranged to exchange heat with an external environment;
a heat pump circuit arranged to selectively exchange heat with said central heating system via a condenser of said heat pump circuit, and arranged to selectively exchange heat with said external environment via said condenser and via said external environment circuit;
a farm circuit arranged to exchange heat with said livestock waste, arranged to selectively exchange heat with said heat pump circuit via an evaporator of said heat pump circuit, and arranged to selectively exchange heat with said external environment via said external environment circuit;
at least one temperature sensor arranged to measure at least one temperature of said farm circuit to establish an achieved cooling energy, which is indicative of an amount of heat energy previously removed from said livestock waste within a predefined period of time; and
a heat pump controller arranged to perform automatic switching between at least three distinct configurations of said heat pump system such that said achieved cooling energy reach a predefined target cooling energy, which is indicative of a desired amount of heat to be removed from said livestock waste within said predefined period of time, wherein said at least three distinct configurations comprise:
   a first cooling configuration wherein said farm circuit exchange heat with said heat pump circuit via said evaporator, and said heat pump circuit exchange heat with said central heating system via said condenser;
   a second cooling configuration wherein said farm circuit exchange heat with said external environment via said external environment circuit; and
   a third cooling configuration wherein said farm circuit exchange heat with said heat pump circuit via said evaporator and said heat pump circuit exchange heat with said external environment via said condenser and via said external environment circuit.

A heat pump system according to the invention may for example be used to implement a method according to the invention. Namely, the at least three configurations of the heat pump system may for example be used to facilitate the three different cooling procedures of a method of the invention. The predefined cooling energy may correspond to a predefined average cooling effect of the livestock waste within a predefined period of time.

A heat pump system according to the invention is advantageous since it may be used to implement a method of the invention. Hence, any advantages of methods of the invention also applies to the heat pump system of the invention.

In an embodiment of the invention, said heat pump system further comprises valves and pumps, wherein said heat pump controller is arranged to control said valves and said pumps to perform said automatic switching.

Using pumps and/or valves to perform switching between the at least three distinct configurations is advantageous, since pump and valves are useful for implementing configurable fluid circuits.

In an embodiment of the invention, said central heating system is associated with a central heating buffer tank.

Using a central heating buffer tank in a central heating system is advantageous, since it ensures a supply of hot central heating fluid, e.g. for example water in a temperature range from 40 degrees Celsius to 80 degrees Celsius, for example water at 60 degrees Celsius.

In an embodiment of the invention, said external environment circuit is associated with a dry cooler.

In an embodiment of the invention, said external environment circuit is associated with a cooling tower.

Using a cooling tower or a dry cooler for heat exchange is advantageous, since such devices are designed to exchange heat.

In an embodiment of the invention, said farm circuit is integrated in a floor of said livestock farm.

In an embodiment of the invention, said farm circuit is integrated in a livestock waste gutter of said livestock farm.

Integrating the farm circuit in a livestock waste gutter is advantageous since it may optimize the heat exchange with the livestock waste. However, note that the farm circuit is not restricted to any particular location according to the invention, and may be located anywhere at which it is able to exchange any substantial heat with the livestock waste.

An aspect of the invention relates to use of any of the above described heat pump systems for cooling livestock waste according to any of the above described methods.

### The drawings

Various embodiments of the invention will in the following be described with reference to the drawings where
fig. 1 illustrates a flow chart according to a method of an embodiment of the invention,
fig. 2 illustrates a flow chart according to a method of another embodiment of the invention,
fig. 3 illustrates a schematic overview of a heat pump system 1 according to an embodiment of the invention, and
fig. 4 illustrates a schematic overview of a heat pump system 1 according to another embodiment of the invention.

### Detailed description

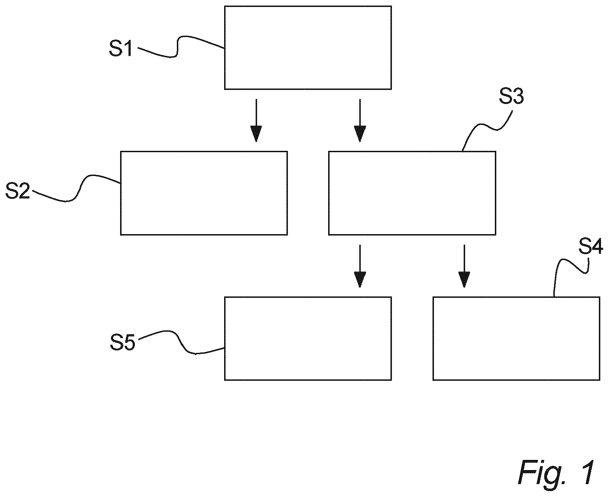

Fig. 1 illustrates a flow chart according to a method of an embodiment of the invention. The embodiment is arranged to remove a predefined amount of heat energy from livestock waste on a daily basis, corresponding to a predefined average cooling effect of the livestock waste. To do so, the embodiment is arranged to switch between three different cooling procedures. In each of the procedures, heat is removed from the livestock waste by circulating coolant through a farm circuit arranged to exchange heat with the livestock waste. But heat is removed from the coolant differently in each of the three procedures.

In a first step S1, a central heating temperature is compared to a central heating threshold temperature. If the central heating temperature is below the central heating threshold temperature, then the next step is to initiate a first cooling procedure S2. If instead the central heating temperature is above the central heating threshold temperature, then the next step is to analyse an environment temperature S3.

When the first cooling procedure is initiated S2, then heat is removed from the coolant by moving heat of the coolant to a central heating buffer tank through a heat pump circuit. Namely, the heat pump circuit comprises a compressor, a condenser, an expansion valve, and an evaporator, through which a heat pump fluid is circulated. Heat from the coolant is exchanged with heat pump fluid through the evaporator, and in turn the heat pump fluid exchanges heat with a central heating fluid through the condenser. The central heating fluid is circulated to the central heating buffer tank, from where it may be utilized for central heating purposes, e.g. providing heat for a building.

While the first cooling procedure is active S2, the central heating temperature is continuously compared to the central heating threshold temperature S1. If at any point the central heating temperature is above the central heating threshold temperature, then the first cooling procedure is stopped, and the next step is to analyse an environment temperature S3.

To analyse the environment temperature S3, it is compared to an environment threshold temperature. If the environment temperature is below the environment threshold temperature, then the next step is to initiate a second cooling procedure S4. If instead the environment temperature is above the environment threshold temperature, then the next step is to initiate a third cooling procedure S5.

When the second cooling procedure is initiated S4, then heat is removed from the coolant by moving heat of the coolant to an external environment by circulating the coolant through an external environment circuit comprising a heat exchanger located in the external environment. As such, the heat pump circuit is not utilized during this procedure. The heat exchanger located in the external environment may for example be a dry cooler, a cooling tower, or circuitry arranged to exchange heat with soil, groundwater, seawater, freshwater, or air.

When the third cooling procedure is initiated S5, then heat is removed from the coolant by moving heat of the coolant to an external environment through the heat pump circuit also used in the first cooling procedure. Heat from the coolant is exchanged with heat pump fluid through the evaporator, and in turn the heat pump fluid exchanges heat with a central heating fluid through the condenser. The central heating fluid is circulated through a heat exchanger, where heat is exchanged with the external environment circuit, allowing the heat to be moved to the external environment via the heat exchanger located in the external environment.

While the second or the third cooling procedure is active S4,S5, the central heating temperature is continuously compared to the central heating threshold temperature S1. If at any point the central heating temperature is below the central heating threshold temperature, then the second or third cooling procedure is stopped, and the next step is to initiate the first cooling procedure S2.

While the third cooling procedure is active S5, the environment temperature is continuously compared to the environment threshold temperature S3. If at any point the environment temperature is below the environment threshold temperature, then the third cooling procedure is stopped, and the next step is to initiate the second cooling procedure S4.

While each of the procedures is activated, the amount of heat energy removed from the livestock waste is measured, for example based on measuring the temperature of the coolant before and after it has circulated through the farm circuit where it exchanges heat with the livestock waste. The amount of heat energy removed from the livestock waste may then for example be calculated through a combination of coolant flowrate, coolant heat capacity, and difference of temperature of coolant before and after it has circulated through the farm circuit. Within each day, based on the calculated heat energy removed from the livestock waste, an achieved cooling energy, corresponding to an accumulated amount of heat energy removed from the livestock waste that day, is established.

The accumulated amount of heat energy removed from the livestock waste is continuously compared to the predefined amount of heat energy. If at any point the accumulated amount of heat energy removed from the livestock waste is above the predefined amount of heat energy, then the embodiment is arranged to deactivate the second cooling procedure and the third cooling procedure, such that these procedures stop if one of them is currently active, and such that they may no longer be initiated. As such, for the rest of that day, the livestock waste will no longer be cooled by exchanging heat with the external environment, but only based on whether the central heating temperature is above or below the central heating threshold temperature.

Consequently, when the central heating temperature is above the central heating threshold temperature, the embodiment is in an idle state, in which no substantial cooling of the livestock waste is performed. If at any point the central heating temperature is below the central heating threshold temperature, the first cooling procedure is initiated again.

When a new day starts, the accumulated amount of heat energy removed from the livestock waste is reset, and the second and third cooling procedures may be initiated and become active again, based on the central heating temperature and the external environment temperature.

The circulation of coolant, central heating fluid, heat pump fluid, or any other fluid necessary for implementing the invention may typically be carried out by several fluid pumps, installed in the embodiment of the invention. Each of the three cooling procedures may typically require a predefined distinct set of pumps to be activated while the remaining pumps are deactivated. Similarly, the circulation of fluid may further be controlled by valves, installed in the embodiment of the invention. Each of the three cooling procedures may typically require a predefined distinct set of valves to be opened while the remaining valves are closed. As such, initiating any of the cooling procedures may be understood as opening/closing a distinct set of valves, activating/deactivating a distinct set of pumps, such that the fluids flow as intended for the given cooling procedure.

The method of the embodiment is being managed by a controller. The controller may for example be any kind of processing device, which is able to manage pumps and valves, e.g. based on input temperatures. As such, the controller may for example be based on an analogue circuit, a digital circuit, a microcontroller, a programmable logic controller, a field-programmable gate array, or an associated computer system.

In some embodiments of the invention, the initiation of the third cooling procedure is further based on a predicted cooling energy of the third cooling procedure, which is indicative of an amount of heat energy predicted to be removed by initiating and applying the third cooling procedure for a remaining duration the day. If, for example, a difference between the predicted cooling energy of the third cooling procedure and a remaining cooling energy is above a third cooling procedure threshold, then the third cooling procedure is not initiated. Consequently, the third cooling procedure is not initiated unless it is strictly necessary to do so to reach the predefined average cooling effect. Instead, the embodiment primarily utilizes the first and second cooling procedures.

In some embodiments, the temperature of the condenser is regulated to a first condenser temperature in the first cooling procedure and to a second condenser temperature in the third cooling procedure. Then, the temperature difference between the evaporator and the condenser during the third cooling procedure can be reduced, leading to a reduced environmental footprint of the cooling procedure.

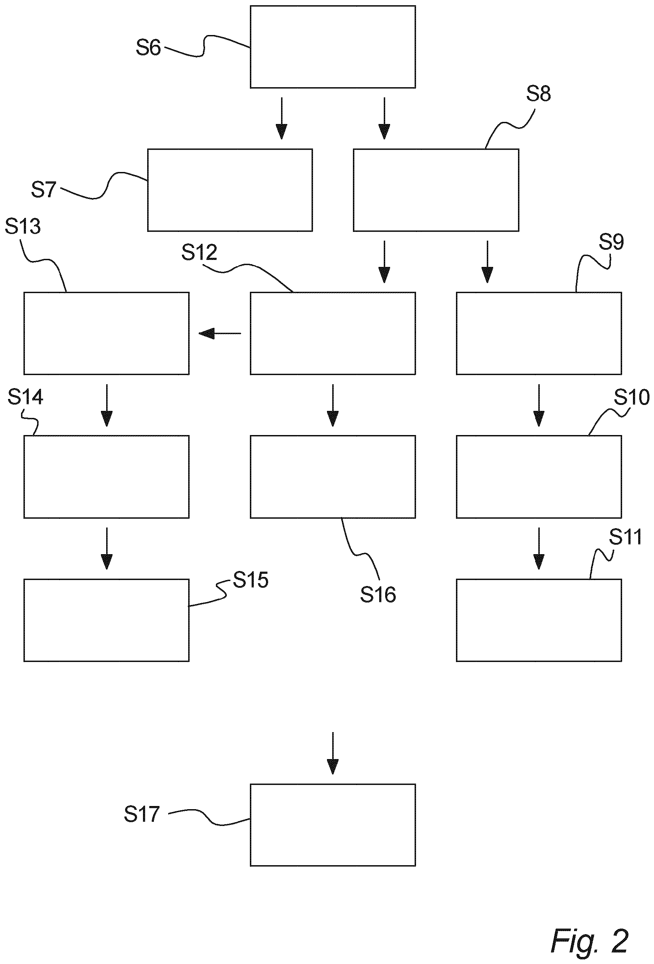

Fig. 2 illustrates a flow chart according to a method of another embodiment of the invention. The embodiment is arranged to remove a predefined amount of heat from livestock waste on a daily basis, corresponding to a predefined average cooling effect of the livestock waste, using three different cooling procedures. Compared to the flow chart illustrated in fig. 1, the flow chart illustrated in fig. 2 and the corresponding method has a number of additional advantageous features.

In a first step S6, a central heating temperature is compared to a central heating threshold temperature. If the central heating temperature is below the central heating threshold temperature, then the next step is to initiate a first cooling procedure S7. If instead the central heating temperature is above the central heating threshold temperature, then the next step is to analyse environment temperatures S8.

When the first cooling procedure is initiated S7, heat is removed from the coolant by moving heat of the coolant to a central heating buffer tank through a heat pump circuit. The heat pump circuit comprises a compressor, a condenser, an expansion valve, and an evaporator, through which a heat pump fluid is circulated. Heat from the coolant is exchanged with heat pump fluid through the evaporator, and in turn the heat pump fluid exchanges heat with a central heating fluid through the condenser. The central heating fluid is circulated to the central heating buffer tank, from where it may be utilized for central heating purposes, e.g. providing heat for a building.

While the first cooling procedure is active S7, the central heating temperature is continuously compared to the central heating threshold temperature S6. If at any point the central heating temperature is above the central heating threshold temperature, then the first cooling procedure is stopped, and the next step is to analyse environment temperatures S8.

When environment temperatures are analysed S8, a number of sub-environment temperatures, each associated with an external sub-environment of the external environment, are individually compared to associated sub-environment threshold temperatures. An external sub-environment may for example be air, soil, groundwater, seawater, or fresh water. The embodiment may thus, for example, be configured to measure an air temperature and a groundwater temperature, which are compared to an air threshold temperature and a groundwater threshold temperature, respectively. If at least one of the sub-environment temperatures is below its associated sub-environment threshold temperature, then the next step is to select an external sub-environment S9. If instead none of the sub-environment temperatures are below their respective associated sub-environment threshold temperatures, then the next step is to perform an analysis of average cooling effects S12.

Selecting an external sub-environment S9 may for example be based on the step of analysing environment temperatures S8. For example, if only one of the sub-environment temperatures is below its associated sub-environment threshold temperature, then the external sub-environment associated with this sub-environment temperature is selected. If several sub-environment temperatures are below their respective associated sub-environment threshold temperatures, then the method may for example comprise selecting an external sub-environment based on a priority list or based on further analysis of sub-environment temperatures, e.g. selecting the external sub-environment which has an associated sub-environment temperature which is furthest below its associated sub-environment threshold temperature. In some embodiments, several external sub-environments are selected. When at least one external sub-environment has been selected S9, the next step is to initiate the second cooling procedure S10.

When the second cooling procedure is initiated S10, heat is removed from the coolant by moving heat of the coolant to the at least one external sub-environment which was just selected S9 by circulating the coolant through the at least one external sub-environment. As such, the heat pump circuit is not utilized during this procedure. The heat may for example be exchanged by using a dry cooler, a cooling tower, or circuitry arranged to exchange heat with soil, groundwater, seawater, freshwater, or air.

While the second cooling procedure is active S10, the sub-environment temperatures are continuously compared to their associated sub-environment threshold temperatures. If it some point, the conditions upon which selecting an external sub-environment S9 was performed change, e.g. a sub-environment temperature cross a sub-environment threshold temperature, then the step of selecting an external sub-environment S9 is performed again. Additionally, if at some point none of the sub-environment temperatures are below their respective associated sub-environment threshold temperatures, then the next step is to perform an analysis of average cooling effects S12.

When the second cooling procedure has been initiated S10, the next step may be to regulate fans at the external sub-environment S11. This depends on whether one of the at least one external sub-environment which was selected S9 is associated with a fan for enhancing the heat exchange with the external sub-environment. In such cases, the rotational speed of any fans relevant for heat exchange is regulated, for example based on measurements of temperature and/or a desired cooling effect.

The aim of performing an analysis of average cooling effects S12 is to determine whether an initiation of the third cooling procedure is necessary to reach the predefined average cooling effect of the livestock waste. If the weather is cold and/or a lot of central heating, this may for example not be necessary. By performing an analysis of average cooling effects S12, it is possible to prolong the initiation of the third cooling procedure as much as possible, thereby saving energy.

Performing an analysis of average cooling effects S12 may typically be based on several calculations but note that the invention is not restricted to any particular series of calculations. In this embodiment, an achieved cooling energy is established. The achieved cooling energy is indicative of the amount of heat already removed from the livestock waste within the current day. It may for example be based on measuring one or more temperatures of the coolant to establish a present cooling effect, which is indicative of a rate at which heat energy is currently being removed. For example, a present cooling effect of 100 kW for a duration of half an hour increases the achieved cooling energy by 50 kWh. Based on the achieved cooling energy, a remaining cooling energy is established which is indicative of an amount of heat energy remaining to be removed from said livestock waste to reach the amount of heat energy removed within the day. For example, the embodiment may be configured to remove 1000 kWh of energy within a day, and if the achieved cooling energy is 700 kWh, the remaining cooling energy is 300 kWh.

Performing an analysis of average cooling effects S12 may typically further rely on establishing a predicted cooling energy of the third cooling procedure. For example, the third cooling procedure may be arranged to provide a cooling effect of 60 kW while five hours remain of the day, and the resulting predicted cooling energy may be obtained by multiplication to be 300 kWh. In other embodiments, the predicted cooling energy may also be based on e.g. historical data, various temperatures, and/or regulation of various temperatures.

Performing an analysis of average cooling effects S12 may typically further rely on a comparison of the remaining cooling energy and the predicted cooling energy, upon which either an external sub-environment is chosen S13, or a pausing procedure is initiated S16. The comparison may for example be based on a relative magnitude or a difference between the remaining cooling energy and the predicted cooling energy. For example, if the predicted cooling energy is 250 kW while the remaining cooling energy is 200 kWh, the difference between the remaining cooling energy and the predicted cooling energy is 50 kWh, and the relative magnitude is (250 kWh)/(200 kWh) = 1.25. The embodiment may for example be arranged to move to the step of selecting an external sub-environment S13 if the difference is below 60 kWh, or for example if the relative magnitude is smaller than 1.5, whereas if this is neither of these criteria are fulfilled, the pausing procedure is initiated S16. If the remaining cooling energy is 0 or below, i.e. if the predefined average cooling effect within the predefined period of time has been reached, the pausing procedure is initiated S16.

The step of selecting an external sub-environment S13 (for the third cooling procedure) is similar to the pervious step of selecting an external sub-environment S9 (for the second cooling procedure). In typical embodiments, these steps may thus for example comprise several of the same elements, e.g. comparison of temperatures to threshold temperatures. When at least one external sub-environment has been selected S13, the next step is to initiate the third cooling procedure S14.

When the third cooling procedure is initiated S14, then heat is removed from the coolant by moving heat of the coolant to the at least one external sub-environment which was just selected S13 through the heat pump circuit also used in the first cooling procedure. Heat from the coolant is exchanged with heat pump fluid through the evaporator, and in turn the heat pump fluid exchanges heat with a central heating fluid through the condenser. The central heating fluid is circulated through at least one heat exchanger, where heat is exchanged with at least one external sub-environment circuit, allowing the heat to be moved to the external environment.

While the third cooling procedure is active S14, the sub-environment temperatures are continuously compared to their associated sub-environment threshold temperatures. If it some point, the conditions upon which selecting an external sub-environment S13 for the third cooling procedure was performed change, e.g. a sub-environment temperature cross a sub-environment threshold temperature, then the step of selecting an external sub-environment S13 is performed again.

Additionally, the analysis of average cooling effects S12 is continuously being performed, such that if conditions upon which the third cooling procedure was initiated S14 change in favour of initiating a pausing procedure, then this the pausing procedure is initiated P16.

When the third cooling procedure has been initiated S14, the next step may be to regulate fans at the external sub-environment and to regulate the condenser to a second condenser temperature S15. Regulation fans at the external sub-environment depends on whether one of the at least one external sub-environment which was selected S13 is associated with a fan for enhancing the heat exchange with the external sub-environment. In such cases, the rotational speed of any fans relevant for heat exchange is regulated, for example based on measurements of temperature and/or a desired cooling effect.

Regulating the condenser to a second condenser temperature may be understood in contrast to regulating the condenser to a first condenser temperature which may for example occur during the first cooling procedure. When central heating is not required, the temperature of the condenser may be decreased ensuring an improved energy efficiency of the heat pump. The regulation may for example comprise decreasing the temperature of the condenser to improve energy efficiency and/or increasing the temperature of the condenser to increase the current cooling effect.

If at any point while the second or the third cooling procedure is active the predefined average cooling effect is reached, the active cooling procedure is stopped, and for the remaining day, only the first cooling procedure can be initiate/activated. Generally, independent of the current step, current status, or active cooling procedure, the first cooling procedure is initiated if the central heating temperature is below the central heating threshold temperature.

When the pausing procedure is initiated S16, any circulation of the cooling, and thus any cooling of the livestock waste, is stopped/paused/halted. A pausing procedure may for example be activated if the predefined average cooling effect has been reached within the predefined period of time, or if an analysis of cooling effects S12 determines that an initiation the third cooling procedure to reach the predefined average cooling effect is not necessary yet.

A final step of the method is to record heat pump data S17. The heat pump data as recorded and stored using a computer system comprising a data storage. The heat pump data comprises digital representations of time stamps; initiating the first cooling procedure; initiating the second cooling procedure; initiating the third cooling procedure; the predefined average cooling effect; the present cooling effect; the achieved cooling energy; the remaining cooling energy; the central heating temperature; the environment temperature; the evaporator temperature; the first condenser temperature; the second condenser temperature; the external sub-environment; the rotational speed; and electrical energy consumption associated with the method/heat pump system.

The embodiment associated with the flow chart illustrated in fig. 2 comprises many different elements. It should be understood that a skilled person may implement the invention using only some of these elements, combining the elements in a different manner, or using elements not described here within the scope of the invention as specified in the claims.

Some embodiments of the invention comprise a step of regulating the evaporator and/or the coolant temperature, for example associated with the first cooling procedure and/or the third coolant procedure.

In typical embodiments of the invention, the current cooling effects provided by the three respective cooling procedures, i.e. the amount of heat energy removed from the livestock waste per unit of time, are not the same. The first cooling procedure may for example have the largest cooling effect, whereas the cooling effects of the second and the third cooling procedures are smaller. However, the invention is not limited to any particular relative cooling effects.

Some embodiments of the invention comprise a step of performing analysis of cooling effects before initiating second cooling procedure.

Some embodiments of the invention are arranged to simultaneously exchange heat directly with an external environment while exchanging heat with a central heating fluid circulating a central heating system. For example, if a central heating temperature of the central heating fluid is below a central heating threshold temperature, while an environment temperature is below an environment threshold temperature. Here, the coolant may for example be circulated such that it exchanges heat with the external environment, before it exchanges heat with the evaporator of the heat pump system, through which heat is exchanged with the central heating system. As such, the invention is not restricted to having one active cooling procedure at a time. As just exemplified, the first and the second cooling procedures may for example be active at the same time. In some embodiments, the first and the third cooling procedure may be active simultaneously. In some embodiments, simultaneously exchanging heat with an external environment while exchanging heat with a central heating fluid circulating a central heating system may be a feature of the first cooling procedure. In some embodiments, simultaneously exchanging heat with an external environment while exchanging heat with a central heating fluid circulating a central heating system may be a separate cooling procedure, e.g. a fourth cooling procedure.

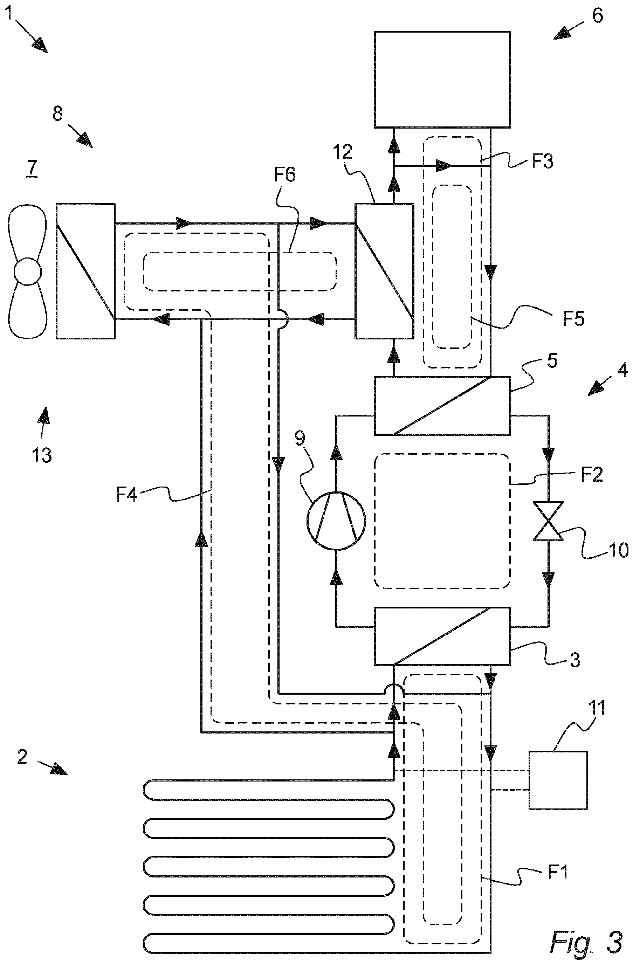

Fig. 3 illustrates a schematic overview of a heat pump system 1 according to an embodiment of the invention. Different configurations of the illustrated exemplary embodiment may thus facilitate the different cooling procedures according to the method of the invention.

Each of the configurations/procedures are associated activation of flow paths F1-F6 of fluids (e.g. central heating fluid, heat pump fluid and coolant). Activation of these any of the flow paths F1-F6 may for example be implemented by opening/closing a set of valves (not shown) and activating/deactivating a distinct set of pumps (not shown), such that the fluids flow as intended for the given flow path.

The first cooling procedure is associated with a first flow path F1, a second flow path F2, and a third flow path F3. The second cooling procedure is associated with a fourth flow path F4. The third cooling procedure is associated with the first flow path F1, the second flow path F2, the fifth flow path F5, and the sixth flow path F6.

In the first flow path F1, coolant circulates a farm circuit 2, where heat may be exchanged with livestock waste, and further, the coolant circulates through an evaporator 3 of a heat pump circuit 4. This flow path may thus facilitate heat transportation from the livestock waste to the evaporator 3.

In the second flow path F2, a heat pump fluid circulates a heat pump circuit 4, through a compressor 9, a condenser, an expansion valve 10, and an evaporator 3. This flow path may thus facilitate heat transportation from the evaporator 3 to the condenser 5.

In the third flow path F3, a central heating fluid circulates through the condenser 5 and through a central heating system 6. The central heating system 6 may for example comprise a central heating buffer tank. This third flow path F3 may thus facilitate heat transportation from the condenser 5 to the central heating system 6.

The first cooling procedure may thus be implemented by the first F1, the second F2, and the third flow path F3, which enables heat transportation from the livestock waste to the central heating system 6.

In the fourth flow path F4, coolant circulates the farm circuit 2, where heat may be exchanged with livestock waste, and further, the coolant circulates through an external environment circuit 8 associated with a dry cooler 13 arranged to exchange heat with an external environment 7. This flow path may thus facilitate heat transportation from the livestock waste to the external environment 7, particularly if the external environment is colder than the livestock waste.

The second cooling procedure may thus be implemented by a fourth flow path F4, which enables heat transportation from the livestock waste to the external environment 7.

In the fifth flow path F5, a central heating fluid circulates through the condenser 5 and through a heat exchanger 12. This flow path may thus facilitate heat transportation from the condenser 5 to the heat exchanger 12.

In the sixth flow path F6, coolant circulates through the heat exchanger 12 and through the external environment circuit 8 associated with the dry cooler 13 arranged to exchange heat with the external environment 7. This flow path may thus facilitate heat transportation from the heat exchanger 12 to the external environment 7.

The third cooling procedure may thus be implemented by the first F1, the second F2, the fifth F5, and the sixth flow path F6, which enables heat transportation from the livestock waste to the external environment 7. In contrast to the second cooling procedure, the third cooling procedure may be utilized to cool the livestock waste even if the external environment 7 is warmer than the livestock waste.

The exemplary heat pump system 1 illustrated in fig. 3 is managed by a controller (not shown), which, for example, may manage pumps and valves to implement the different flow paths, which in turn implements the cooling procedures of the invention.

The switching between the different procedures/configurations by the controller is performed based on an environment temperature of the external environment, a central heating temperature of the central heating fluid, and a predefined average cooling effect to be reached within a predefined period of time. To evaluate what the current average cooling effect is, a temperature sensor 11 measures the temperature of the coolant before and after it has exchanged heat with the livestock waste. Based on this, the controller can for example determine whether switching to the third cooling procedure is necessary in order to reach the predefined average cooling effect within the predefined period of time.

In the exemplary heat pump system 1 illustrated in fig. 3, heat is exchanged with the external environment through a dry cooler. However, note that in other embodiments of the invention, heat may for example be exchanged with the external environment through the heat exchanger 12 or through the condenser 5. As such, exchanging heat with the external environment is not restricted to any particular means.

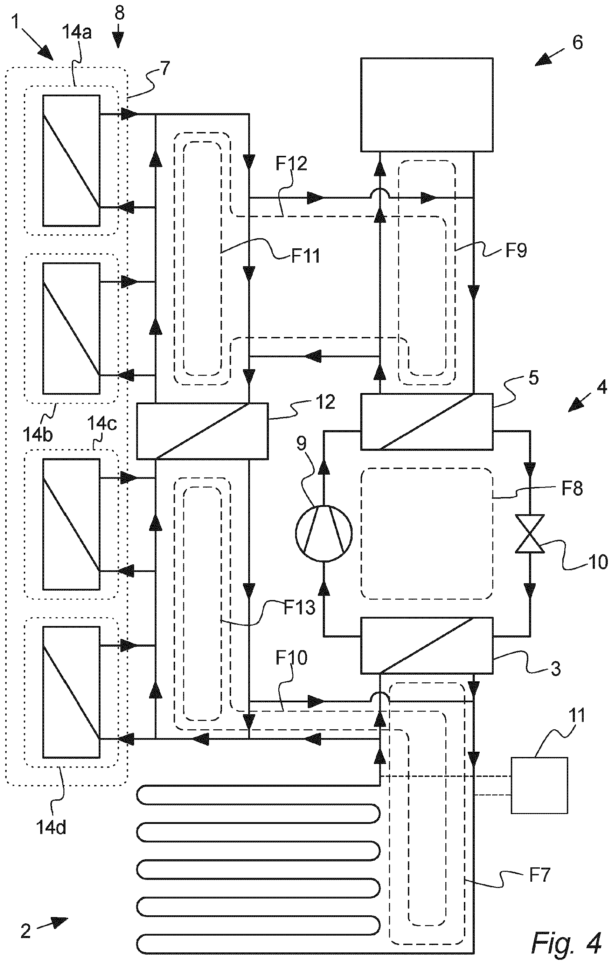

Fig. 4 illustrates a schematic overview of a heat pump system 1 according to another embodiment of the invention. Different configurations of the illustrated exemplary embodiment may thus facilitate the different cooling procedures according to the method of the invention.

In comparison with the embodiment illustrated in fig. 3, the embodiment is further arranged to perform cooling by selecting at least one of multiple external sub-environments 14a-d, particularly in the second or the third cooling procedure/configuration.

In this embodiment, the external environment 7 comprises four external sub-environments 14a-d, in which the heat pump system may exchange heat. The four external sub-environments may for example be air, soil, seawater, and freshwater, respectively, and the heat pump system 1 is configured to measure a temperature of each of these sub-environments, such that at least one of the sub-environments 14a-d may be selected for the second or the third cooling procedure/configuration.

Each of the configurations/procedures are associated activation of flow paths F7-F13 of fluids (e.g. central heating fluid, heat pump fluid and coolant). Activation of these any of the flow paths F7-F13 may for example be implemented by opening/closing a set of valves (not shown) and activating/deactivating a distinct set of pumps (not shown), such that the fluids flow as intended for the given flow path.

The eleventh F11 and the twelfth flow path F12 are arranged to exchange heat with any selected sub-environments of the first 14a and second sub-environment 14b. Similarly, the tenth F10 and the thirteenth flow path F13 are arranged to exchange heat with any selected sub-environments of the third 14c and fourth sub-environment 14d.

The first cooling procedure is associated with a seventh flow path F7, an eighth flow path F8, and a ninth flow path F9. The second cooling procedure is associated with a tenth flow path F10 and, optionally, an eleventh flow path F11. The third cooling procedure is associated with the seventh flow path F7, the eighth flow path F8, the twelfth flow path F12, and, optionally, a thirteenth flow path F13.

In the seventh flow path F7, coolant circulates a farm circuit 2, where heat may be exchanged with livestock waste, and further, the coolant circulates through an evaporator 3 of a heat pump circuit 4. This flow path may thus facilitate heat transportation from the livestock waste to the evaporator 3.

In the eighth flow path F8, a heat pump fluid circulates a heat pump circuit 4, through a compressor 9, a condenser, an expansion valve 10, and an evaporator 3. This flow path may thus facilitate heat transportation from the evaporator 3 to the condenser 5.

In the ninth flow path F9, a central heating fluid circulates through the condenser 5 and through a central heating system 6. The central heating system 6 may for example comprise a central heating buffer tank. This ninth flow path F9 may thus facilitate heat transportation from the condenser 5 to the central heating system 6.

The first cooling procedure may thus be implemented by the seventh F7, the eighth F8, and the ninth flow path F9, which enables heat transportation from the livestock waste to the central heating system 6.

In the tenth flow path F10, coolant circulates the farm circuit 2, where heat may be exchanged with livestock waste, and further, the coolant may exchange heat with any selected sub-environment of the third 14c and the fourth sub-environment 14d. Additionally, the tenth flow path F10 is arranged to exchange heat with the central heating fluid through a heat exchanger 12.

In the eleventh flow path F11, the central heating fluid is arranged to exchange heat with any selected sub-environment of the first 14a and the second sub-environment 14b.

The second cooling procedure may thus be implemented by the tenth flow path F10, and optionally the eleventh flow path F11, which enables heat transportation from the livestock waste to at least one selected sub-environment of the external sub-environments 14a-d.

In the twelfth flow path F12, the central heating fluid is arranged to circulate through the condenser 5 and to exchange heat with any selected sub-environment of the first 14a and the second sub-environment 14b. Additionally, the twelfth flow path F12 is arranged to exchange heat with the coolant through the heat exchanger 12.

In the thirteenth flow path F13, the coolant is arranged to exchange heat with any selected sub-environment of the third 14c and the fourth sub-environment 14d.

The third cooling procedure may thus be implemented by the seventh F7, the eighth F8, a twelfth F12, and, optionally, a thirteenth flow path F13, which enables heat transportation from the livestock waste to at least one selected sub-environment of the external sub-environments 14a-d. In contrast to the second cooling procedure, the third cooling procedure may be utilized to cool the livestock waste even if the external environment 7 is warmer than the livestock waste.

Control of the heat pump system 1 may for example be performed by a controller managing pumps and valves to implement the different flow paths including flow paths to the individual external sub-environments 14a-d.

In some embodiments of the invention, the coolant is arranged to exchange heat with an external sub-environment, and the central heating fluid is arranged to exchange heat with an external sub-environment, but there is no heat exchanger arranged to exchange heat directly between the coolant and the central heating fluid. Such embodiments may for example be substantially similar to the embodiment illustrated in fig. 4, but without the heat exchanger 12 between the coolant and the central heating fluid.

From the above, it is now clear that the invention relates to a method and a system for cooling of livestock waste, for example in a livestock farm. The invention relies on automatic switching between three distinct cooling procedures/configurations to provide a predefined average cooling effect of the livestock waste within a predefined period of time, e.g. within a day. The first procedure/configuration is initiated based on central heating temperature and concerns removing heat from the livestock waste and transporting it to a central heating system via a heat pump system. The second procedure/configuration is initiated based on central heating temperature and an external environment temperature and concerns removing heat from the livestock waste and transporting it to the external environment. The third procedure/configuration is initiated based on central heating temperature and an external environment temperature and concerns removing heat from the livestock waste and transporting it to the external environment via the heat pump system. The third cooling procedure is primarily initiated in order to obtain the predefined average cooling effect of the livestock waste within a predefined period of time. Consequently, the invention allows reducing ammonia and ammonium pollutions, as well as foul-smelling odours, using an approach which produces a minimal environmental footprint.

The invention has been exemplified above with the purpose of illustration rather than limitation with reference to specific examples of methods and heat pump systems for cooling livestock waste. Details such as a specific method and system structures have been provided in order to understand embodiments of the invention. Note that detailed descriptions of well-known systems, devices, circuits, and methods have been omitted so as to not obscure the description of the invention with unnecessary details. It should be understood that the invention is not limited to the particular examples described above and a person skilled in the art can also implement the invention in other embodiments without these specific details. As such, the invention may be designed and altered in a multitude of varieties within the scope of the invention as specified in the claims.

### List of reference signs:

- 1: Heat pump system
- 2: Farm circuit
- 3: Evaporator
- 4: Heat pump circuit
- 5: Condenser
- 6: Central heating system
- 7: External environment
- 8: External environment circuit
- 9: Compressor
- 10: Expansion valve
- 11: Temperature sensor
- 12: Heat exchanger
- 13: Dry cooler
- 14a-d: External sub-environment

- F1-F13: Flow paths
- S1-S17: Method steps

## Claims

1. A method for cooling livestock waste in a livestock farm, said method comprising the steps of:
arranging a farm circuit (2) to exchange heat with said livestock waste in said livestock farm by circulating a coolant through said farm circuit (2);
initiating a first cooling procedure, wherein said coolant is cooled by exchanging heat with an evaporator (3) of a heat pump circuit (4) while cooling a condenser (5) of said heat pump circuit (4) by exchanging heat with a central heating fluid circulating a central heating system (6), when a central heating temperature of said central heating fluid is below a central heating threshold temperature;
initiating a second cooling procedure, wherein said coolant is cooled by exchanging heat directly with an external environment (7), when an environment temperature of said external environment (7) is below an environment threshold temperature; and
initiating a third cooling procedure, wherein said coolant is cooled by exchanging heat with said evaporator (3) while cooling said condenser (5) by exchanging heat with said external environment (7), when said environment temperature is above said environment threshold temperature, when said central heating temperature is above said central heating threshold temperature, and when a predefined average cooling effect of said livestock waste has not been reached within a predefined period of time.

2. A method according to claim 1, wherein said second cooling procedure is initiated when said predefined average cooling effect of said livestock waste has not been reached within said predefined period of time.

3. A method according to any of the preceding claims, wherein only one of said first cooling procedure, said second cooling procedure, and said third cooling procedure can be active at a time.

4. A method according to any of the preceding claims, wherein said method comprises a step of establishing an achieved cooling energy, indicative of an amount of heat energy previously removed from said livestock waste within said predefined period of time and a step of establishing a remaining cooling energy, indicative of an amount of heat energy remaining to be removed from said livestock waste to reach said predefined average cooling effect within said predefined period of time.

5. A method according to claim 4, wherein said method comprises a step of establishing a predicted cooling energy of said third cooling procedure, indicative of an amount of heat energy predicted to be removed by initiating and applying said third cooling procedure for a remaining duration of said predefined period of time; wherein said third cooling procedure is initiated when a difference between said predicted cooling energy of said third cooling procedure and said remaining cooling energy is below a third cooling procedure threshold.

6. A method according to any of claims 4-5, wherein said third cooling procedure is initiated when said achieved cooling energy is below said predefined average cooling effect applied for said predefined period of time.

7. A method according to any of the preceding claims, wherein said first cooling procedure comprises regulating said condenser (5) to a first condenser temperature and said third cooling procedure comprises regulating said condenser (5) to a second condenser temperature, wherein said second condenser temperature is below said first condenser temperature.

8. A method according to any of the preceding claims, wherein said method comprises a step of selecting an external sub-environment (14a-d) from a list of external sub-environments, such that any heat stemming from said livestock waste which is exchanged with said external environment (7) is primarily exchanged with said external sub-environment (14a-d).

9. A method according to any of the preceding claims, wherein said exchanging heat with said external environment (7) comprises rotating one or more fans, wherein each fan is associated with a rotational speed, wherein said rotational speed is regulated differently based on initiating said second and said third cooling procedures.

10. A method according to any of the preceding claims, wherein said method further comprises initiating said third cooling procedure when a second predefined average cooling effect of said livestock waste has not been reached within a second predefined period of time.

11. A method according to any of the preceding claims, wherein said method comprises a step of activating an alarm, if said predefined average cooling effect is not reached within said predefined period of time.

12. A method according to any of the preceding claims, wherein said method comprises a step of recording heat pump data and storing said heat pump data on a computer system comprising a data storage, wherein said heat pump data comprises digital representations of one or more of the following:
time stamps;
said initiating said first cooling procedure;
said initiating said second cooling procedure;
said initiating said third cooling procedure;
said predefined average cooling effect;
a present cooling effect;
said achieved cooling energy;
said remaining cooling energy;
said central heating temperature;
said environment temperature;
said evaporator temperature;
said first condenser temperature;
said second condenser temperature;
said external sub-environment (14a-d);
said rotational speed; and
electrical energy consumption associated with said method.

13. A heat pump system (1) for cooling livestock waste in a livestock farm, said heat pump system (1) comprising:
a central heating system (6);
an external environment circuit (8) arranged to exchange heat with an external environment (7);
a heat pump circuit (4) arranged to selectively exchange heat with said central heating system (6) via a condenser (5) of said heat pump circuit (4), and arranged to selectively exchange heat with said external environment (7) via said condenser (5) and via said external environment circuit (8);
a farm circuit (2) arranged to exchange heat with said livestock waste, arranged to selectively exchange heat with said heat pump circuit (4) via an evaporator (3) of said heat pump circuit (4), and arranged to selectively exchange heat with said external environment (7) via said external environment circuit (8);
at least one temperature sensor (11) arranged to measure at least one temperature of said farm circuit (2) to establish an achieved cooling energy, which is indicative of an amount of heat energy previously removed from said livestock waste within a predefined period of time; and
a heat pump controller arranged to perform automatic switching between at least three distinct configurations of said heat pump system (1) such that said achieved cooling energy reach a predefined target cooling energy, which is indicative of a desired amount of heat to be removed from said livestock waste within said predefined period of time, wherein said at least three distinct configurations comprise:
a first cooling configuration wherein said farm circuit (2) exchange heat with said heat pump circuit (4) via said evaporator (3), and said heat pump circuit (4) exchange heat with said central heating system (6) via said condenser (5);
a second cooling configuration wherein said farm circuit (2) exchange heat with said external environment (7) via said external environment circuit (8); and
a third cooling configuration wherein said farm circuit (2) exchange heat with said heat pump circuit (4) via said evaporator (3) and said heat pump circuit (4) exchange heat with said external environment (7) via said condenser (5) and via said external environment circuit (8).

14. A heat pump system (1) according to claim 14, wherein said heat pump system (1) further comprises valves and pumps, wherein said heat pump controller is arranged to control said valves and said pumps to perform said automatic switching.

15. Use of a heat pump system (1) according to any of the claims 13-14 for cooling livestock waste according to a method according to any of the claims 1-12.

## Patentansprüche

1. Verfahren zum Kühlen von Viehabfällen in einem Viehbetrieb, wobei das Verfahren die folgenden Schritte umfasst:
Auslegen eines Betriebskreislaufs (2) zum Austauschen von Wärme mit den Viehabfällen in dem Viehbetrieb durch Zirkulierenlassen eines Kühlmittels durch den Betriebskreislauf (2);
Einleiten eines ersten Kühlvorgangs, wobei das Kühlmittel durch Austauschen von Wärme mit einem Verdampfer (3) eines Wärmepumpenkreislaufs (4) gekühlt wird, während ein Kondensator (5) des Wärmepumpenkreislaufs (4) durch Austauschen von Wärme mit einem Zentralheizungsfluid gekühlt wird, das in einem Zentralheizungssystem (6) zirkuliert, wenn eine Zentralheizungstemperatur des Zentralheizungsfluids unter einer Zentralheizungsschwellentemperatur liegt;
Einleiten eines zweiten Kühlvorgangs, wobei das Kühlmittel durch Austauschen von Wärme direkt mit einer äußeren Umgebung (7) gekühlt wird, wenn eine Umgebungstemperatur der äußeren Umgebung (7) unter einer Umgebungsschwellentemperatur liegt; und
Einleiten eines dritten Kühlvorgangs, wobei das Kühlmittel durch Austauschen von Wärme mit dem Verdampfer (3) gekühlt wird, während der Kondensator (5) durch Austauschen von Wärme mit der äußeren Umgebung (7) gekühlt wird, wenn die Umgebungstemperatur über der Umgebungsschwellentemperatur liegt, wenn die Zentralheizungstemperatur über der Zentralheizungsschwellentemperatur liegt und wenn eine vordefinierte durchschnittliche Kühlwirkung der Viehabfälle nicht innerhalb einer vordefinierten Zeitspanne erreicht wurde.

2. Verfahren nach Anspruch 1, wobei der zweite Kühlvorgang eingeleitet wird, wenn die vordefinierte durchschnittliche Kühlwirkung der Viehabfälle nicht innerhalb der vordefinierten Zeitspanne erreicht wurde.

3. Verfahren nach einem der vorhergehenden Ansprüche, wobei nur einer von dem ersten Kühlvorgang, dem zweiten Kühlvorgang und dem dritten Kühlvorgang jeweils aktiv sein kann.

4. Verfahren nach einem der vorhergehenden Ansprüche, wobei das Verfahren einen Schritt eines Feststellens einer erreichten Kühlenergie, die eine Menge an Wärmeenergie angibt, die zuvor innerhalb der vordefinierten Zeitspanne den Viehabfällen entzogen wurde, und einen Schritt eines Feststellen einer verbleibenden Kühlenergie umfasst, die eine Menge an Wärmeenergie angibt, die noch den Viehabfällen zu entziehen ist, um die vordefinierte durchschnittliche Kühlwirkung innerhalb der vordefinierten Zeitspanne zu erreichen.

5. Verfahren nach Anspruch 4, wobei das Verfahren einen Schritt eines Festlegens einer vorhergesagten Kühlenergie des dritten Kühlvorgangs umfasst, die eine Menge an Wärmeenergie angibt, die voraussichtlich durch Einleiten und Anwenden des dritten Kühlvorgangs für eine verbleibende Dauer der vordefinierten Zeitspanne entfernt wird; wobei der dritte Kühlvorgang eingeleitet wird, wenn eine Differenz zwischen der vorhergesagten Kühlenergie des dritten Kühlvorgangs und der verbleibenden Kühlenergie unter einem Schwellenwert des dritten Kühlvorgangs liegt.

6. Verfahren nach einem der Ansprüche 4-5, wobei der dritte Kühlvorgang eingeleitet wird, wenn die erreichte Kühlenergie unter der vordefinierten durchschnittlichen Kühlwirkung liegt, die für die vordefinierte Zeitspanne angewendet wird.

7. Verfahren nach einem der vorhergehenden Ansprüche, wobei der erste Kühlvorgang Regulieren des Kondensators (5) auf eine erste Kondensatortemperatur umfasst und der dritte Kühlvorgang Regulieren des Kondensators (5) auf eine zweite Kondensatortemperatur umfasst, wobei die zweite Kondensatortemperatur unter der ersten Kondensatortemperatur liegt.

8. Verfahren nach einem der vorhergehenden Ansprüche, wobei das Verfahren einen Schritt eines Auswählens einer äußeren Teilumgebung (14a-d) aus einer Liste von äußeren Teilumgebungen umfasst, sodass jegliche Wärme, die von den Viehabfällen stammt und die mit der äußeren Umgebung (7) ausgetauscht wird, hauptsächlich mit der äußeren Teilumgebung (14a-d) ausgetauscht wird.

9. Verfahren nach einem der vorhergehenden Ansprüche, wobei das Austauschen von Wärme mit der äußeren Umgebung (7) Rotierenlassen eines oder mehrerer Lüfter umfasst, wobei jedem Lüfter eine Drehzahl zugeordnet ist, wobei die Drehzahl basierend auf dem Einleiten des zweiten und des dritten Kühlvorgangs unterschiedlich reguliert wird.

10. Verfahren nach einem der vorhergehenden Ansprüche, wobei das Verfahren ferner Einleiten des dritten Kühlvorgangs umfasst, wenn eine zweite vordefinierte durchschnittliche Kühlwirkung der Viehabfälle nicht innerhalb einer zweiten vordefinierten Zeitspanne erreicht wurde.

11. Verfahren nach einem der vorhergehenden Ansprüche, wobei das Verfahren einen Schritt eines Aktivierens eines Alarms umfasst, wenn die vordefinierte durchschnittliche Kühlwirkung nicht innerhalb der vordefinierten Zeitspanne erreicht wird.

12. Verfahren nach einem der vorhergehenden Ansprüche, wobei das Verfahren einen Schritt eines Aufzeichnens von Wärmepumpendaten und Speichern der Wärmepumpendaten auf einem Computersystem umfasst, das einen Datenspeicher umfasst, wobei die Wärmepumpendaten digitale Darstellungen von einem oder mehreren der Folgenden umfassen:
Zeitstempel;
das Einleiten des ersten Kühlvorgangs;
das Einleiten des zweiten Kühlvorgangs;
das Einleiten des dritten Kühlvorgangs;
die vordefinierte durchschnittliche Kühlwirkung;
eine vorliegende Kühlwirkung;
die erreichte Kühlenergie;
die verbleibende Kühlenergie;
die Zentralheizungstemperatur;
die Umgebungstemperatur;
die Verdampfertemperatur;
die erste Kondensatortemperatur;
die zweite Kondensatortemperatur;
die äußere Teilumgebung (14a-d);
die Drehzahl; und
der dem Verfahren zugeordnete elektrische Energieverbrauch.

13. Wärmepumpensystem (1) zum Kühlen von Viehabfällen in einem Viehbetrieb, wobei das Wärmepumpensystem (1) umfasst:
ein Zentralheizungssystem (6);
einen äußeren Umgebungskreislauf (8), der dazu ausgelegt ist, Wärme mit einer äußeren Umgebung (7) auszutauschen;
einen Wärmepumpenkreislauf (4), der dazu ausgelegt ist, selektiv Wärme mit dem Zentralheizungssystem (6) über einen Kondensator (5) des Wärmepumpenkreislaufs (4) auszutauschen, und dazu ausgelegt ist, selektiv Wärme mit der äußeren Umgebung (7) über den Kondensator (5) und über den äußeren Umgebungskreislauf (8) auszutauschen;
einen Betriebskreislauf (2), der dazu ausgelegt ist, Wärme mit den Viehabfällen auszutauschen, dazu ausgelegt ist, selektiv Wärme mit dem Wärmepumpenkreislauf (4) über einen Verdampfer (3) des Wärmepumpenkreislaufs (4) auszutauschen, und dazu ausgelegt ist, selektiv Wärme mit der äußeren Umgebung (7) über den äußeren Umgebungskreislauf (8) auszutauschen;
mindestens einen Temperatursensor (11), der dazu ausgelegt ist, mindestens eine Temperatur des Betriebskreislaufs (2) zu messen, um eine erreichte Kühlenergie festzustellen, die eine Menge an Wärmeenergie angibt, die zuvor innerhalb einer vordefinierten Zeitspanne den Viehabfällen entzogen wurde; und
eine Wärmepumpensteuerung, die dazu ausgelegt ist, ein automatisches Umschalten zwischen mindestens drei unterschiedlichen Konfigurationen des Wärmepumpensystems (1) durchzuführen, sodass die erreichte Kühlenergie eine vordefinierte Zielkühlenergie erreicht, die eine gewünschte Wärmemenge angibt, die den Viehabfällen innerhalb der vordefinierten Zeitspanne zu entziehen ist, wobei die mindestens drei unterschiedlichen Konfigurationen umfassen:
eine erste Kühlkonfiguration, bei der der Betriebskreislauf (2) Wärme mit dem Wärmepumpenkreislauf (4) über den Verdampfer (3) austauscht und der Wärmepumpenkreislauf (4) Wärme mit dem Zentralheizungssystem (6) über den Kondensator (5) austauscht;
eine zweite Kühlkonfiguration, bei der der Betriebskreislauf (2) Wärme mit der äußeren Umgebung (7) über den äußeren Umgebungskreislauf (8) austauscht; und
eine dritte Kühlkonfiguration, bei der der Betriebskreislauf (2) Wärme mit dem Wärmepumpenkreislauf (4) über den Verdampfer (3) austauscht und der Wärmepumpenkreislauf (4) Wärme mit der äußeren Umgebung (7) über den Kondensator (5) und über den äußeren Umgebungskreislauf (8) austauscht.

14. Wärmepumpensystem (1) nach Anspruch 14, wobei das Wärmepumpensystem (1) ferner Ventile und Pumpen umfasst, wobei die Wärmepumpensteuerung dazu ausgelegt ist, die Ventile und die Pumpen zu steuern, um das automatische Umschalten durchzuführen.

15. Verwendung eines Wärmepumpensystems (1) nach einem der Ansprüche 13-14 zum Kühlen von Viehabfällen gemäß einem Verfahren nach einem der Ansprüche 1-12.

## Revendications

1. Procédé permettant le refroidissement de déchets d'élevage dans une ferme d'élevage, ledit procédé comprenant les étapes de :
agencement d'un circuit de ferme (2) pour échanger de la chaleur avec lesdits déchets d'élevage dans ladite ferme d'élevage en faisant circuler un fluide de refroidissement à travers ledit circuit de ferme (2) ;
lancement d'une première procédure de refroidissement, ledit fluide de refroidissement étant refroidi en échangeant de la chaleur avec un évaporateur (3) d'un circuit de pompe à chaleur (4) tout en refroidissant un condenseur (5) dudit circuit de pompe à chaleur (4) en échangeant de la chaleur avec un fluide de chauffage central en circulation dans un système de chauffage central (6), lorsqu'une température de chauffage central dudit fluide de chauffage central est inférieure à une température seuil de chauffage central ;
lancement d'une deuxième procédure de refroidissement, ledit fluide de refroidissement étant refroidi en échangeant de la chaleur directement avec un environnement extérieur (7), lorsqu'une température ambiante dudit environnement extérieur (7) est inférieure à une température ambiante seuil ; et
lancement d'une troisième procédure de refroidissement, ledit fluide de refroidissement étant refroidi en échangeant de la chaleur avec ledit évaporateur (3) tout en refroidissant ledit condenseur (5) en échangeant de la chaleur avec ledit environnement extérieur (7), lorsque ladite température ambiante est supérieure à ladite température ambiante seuil, lorsque ladite température de chauffage central est supérieure à ladite température seuil de chauffage central, et lorsqu'un effet de refroidissement moyen prédéfini desdits déchets d'élevage n'a pas été atteint dans une période de temps prédéfinie.

2. Procédé selon la revendication 1, ladite deuxième procédure de refroidissement étant lancée lorsque ledit effet de refroidissement moyen prédéfini desdits déchets d'élevage n'a pas été atteint dans ladite période de temps prédéfinie.

3. Procédé selon l'une quelconque des revendications précédentes, une seule de ladite première procédure de refroidissement, de ladite deuxième procédure de refroidissement et de ladite troisième procédure de refroidissement pouvant être active à la fois.

4. Procédé selon l'une quelconque des revendications précédentes, ledit procédé comprenant une étape d'établissement d'une énergie de refroidissement atteinte, indiquant une quantité d'énergie thermique précédemment retirée desdits déchets d'élevage dans ladite période de temps prédéfinie et une étape d'établissement d'une énergie de refroidissement restante, indiquant une quantité d'énergie thermique restant à éliminer desdits déchets d'élevage pour atteindre ledit effet de refroidissement moyen prédéfini dans ladite période de temps prédéfinie.

5. Procédé selon la revendication 4, ledit procédé comprenant une étape d'établissement d'une énergie de refroidissement prédite de ladite troisième procédure de refroidissement, indiquant une quantité d'énergie thermique prédite à éliminer en lançant et en appliquant ladite troisième procédure de refroidissement pendant une durée restante de ladite période de temps prédéfinie ; ladite troisième procédure de refroidissement étant lancée lorsqu'une différence entre ladite énergie de refroidissement prédite de ladite troisième procédure de refroidissement et ladite énergie de refroidissement restante est inférieure à un seuil de troisième procédure de refroidissement.

6. Procédé selon l'une quelconque des revendications 4 à 5, ladite troisième procédure de refroidissement étant lancée lorsque ladite énergie de refroidissement obtenue est inférieure audit effet de refroidissement moyen prédéfini appliqué pendant ladite période de temps prédéfinie.

7. Procédé selon l'une quelconque des revendications précédentes, ladite première procédure de refroidissement comprenant la régulation dudit condenseur (5) à une première température de condenseur et ladite troisième procédure de refroidissement comprenant la régulation dudit condenseur (5) à une seconde température de condenseur, ladite seconde température de condenseur étant inférieure à ladite première température de condenseur.

8. Procédé selon l'une quelconque des revendications précédentes, ledit procédé comprenant une étape de sélection d'un sous-environnement extérieur (14a-d) à partir d'une liste de sous-environnements extérieurs, de sorte que toute chaleur provenant desdits déchets d'élevage qui est échangée avec ledit environnement extérieur (7) soit principalement échangée avec ledit sous-environnement extérieur (14a-d).

9. Procédé selon l'une quelconque des revendications précédentes, ledit échange de chaleur avec ledit environnement extérieur (7) comprenant la rotation d'un ou plusieurs ventilateurs, chaque ventilateur étant associé à une vitesse de rotation, ladite vitesse de rotation étant régulée différemment sur la base du lancement desdites deuxième et troisième procédures de refroidissement.

10. Procédé selon l'une quelconque des revendications précédentes, ledit procédé comprenant en outre le lancement de ladite troisième procédure de refroidissement lorsqu'un second effet de refroidissement moyen prédéfini desdits déchets d'élevage n'a pas été atteint dans une seconde période de temps prédéfinie.

11. Procédé selon l'une quelconque des revendications précédentes, ledit procédé comprenant une étape d'activation d'une alarme, si ledit effet de refroidissement moyen prédéfini n'est pas atteint dans ladite période de temps prédéfinie.

12. Procédé selon l'une quelconque des revendications précédentes, ledit procédé comprenant une étape d'enregistrement de données de pompe à chaleur et de stockage desdites données de pompe à chaleur sur un système informatique comprenant un dispositif de stockage de données, lesdites données de pompe à chaleur comprenant des représentations numériques d'un ou plusieurs des suivants :
des horodatages ;
ledit lancement de ladite première procédure de refroidissement ;
ledit lancement de ladite deuxième procédure de refroidissement ;
ledit lancement de ladite troisième procédure de refroidissement ;
ledit effet de refroidissement moyen prédéfini ;
un effet de refroidissement présent ;
ladite énergie de refroidissement obtenue ;
ladite énergie de refroidissement restante ;
ladite température de chauffage central ;
ladite température ambiante ;
ladite température d'évaporateur ;
ladite première température de condenseur ;
ladite seconde température de condenseur ;
ledit sous-environnement extérieur (14a-d) ;
ladite vitesse de rotation ; et
la consommation d'énergie électrique associée audit procédé.

13. Système de pompe à chaleur (1) destiné à refroidir les déchets d'élevage dans une ferme d'élevage, ledit système de pompe à chaleur (1) comprenant :
un système de chauffage central (6) ;
un circuit d'environnement extérieur (8) agencé pour échanger de la chaleur avec un environnement extérieur (7) ;
un circuit de pompe à chaleur (4) agencé pour échanger sélectivement de la chaleur avec ledit système de chauffage central (6) par l'intermédiaire d'un condenseur (5) dudit circuit de pompe à chaleur (4), et agencé pour échanger sélectivement de la chaleur avec ledit environnement extérieur (7) par l'intermédiaire dudit condenseur (5) et par l'intermédiaire dudit circuit d'environnement extérieur (8) ;
un circuit de ferme (2) agencé pour échanger de la chaleur avec lesdits déchets d'élevage, agencé pour échanger sélectivement de la chaleur avec ledit circuit de pompe à chaleur (4) par l'intermédiaire d'un évaporateur (3) dudit circuit de pompe à chaleur (4), et agencé pour échanger sélectivement de la chaleur avec ledit environnement extérieur (7) par l'intermédiaire dudit circuit d'environnement extérieur (8) ;
au moins un capteur de température (11) agencé pour mesurer au moins une température dudit circuit de ferme (2) afin d'établir une énergie de refroidissement obtenue, indiquant une quantité d'énergie thermique précédemment retirée desdits déchets d'élevage dans une période de temps prédéfinie ; et
un dispositif de commande de pompe à chaleur agencé pour réaliser une commutation automatique entre au moins trois configurations distinctes dudit système de pompe à chaleur (1) de sorte que ladite énergie de refroidissement obtenue atteigne une énergie de refroidissement cible prédéfinie, indiquant une quantité souhaitée de chaleur à retirer desdits déchets d'élevage dans ladite période de temps prédéfinie, lesdites au moins trois configurations distinctes comprenant :
une première configuration de refroidissement dans laquelle ledit circuit de ferme (2) échange de la chaleur avec ledit circuit de pompe à chaleur (4) par l'intermédiaire dudit évaporateur (3), et ledit circuit de pompe à chaleur (4) échange de la chaleur avec ledit système de chauffage central (6) par l'intermédiaire dudit condenseur (5) ;
une deuxième configuration de refroidissement dans laquelle ledit circuit de ferme (2) échange de la chaleur avec ledit environnement extérieur (7) par l'intermédiaire dudit circuit d'environnement extérieur (8) ; et
une troisième configuration de refroidissement dans laquelle ledit circuit de ferme (2) échange de la chaleur avec ledit circuit de pompe à chaleur (4) par l'intermédiaire dudit évaporateur (3) et ledit circuit de pompe à chaleur (4) échange de la chaleur avec ledit environnement extérieur (7) par l'intermédiaire dudit condenseur (5) et par l'intermédiaire dudit circuit d'environnement extérieur (8).

14. Système de pompe à chaleur (1) selon la revendication 14, ledit système de pompe à chaleur (1) comprenant en outre des soupapes et des pompes, ledit dispositif de commande de pompe à chaleur étant agencé pour commander lesdites soupapes et lesdites pompes pour réaliser ladite commutation automatique.

15. Utilisation d'un système de pompe à chaleur (1) selon l'une quelconque des revendications 13 à 14 pour le refroidissement des déchets d'élevage selon un procédé selon l'une quelconque des revendications 1 à 12.
